# EUROPEAN PATENT SPECIFICATION

(11) **EP 0 492 758 B1**
(45) Date of publication and mention of the grant of the patent: **19.04.1995**
(21) Application number: 91250339.8
(22) Date of filing: 18.12.1991
(51) Int. Cl.: B01D 35/06, B01D 53/34

(54) **Device for the treatment of absorbing solution in exhaust gas desulfurization apparatus**
Vorrichtung zur Behandlung von Absorptionslösungen aus Abgas-Entschwefelungsanlagen
Dispositif de traitement d'une solution absorbante d'appareil de désulfuration de gaz d'échappement

(30) Priority: 25.12.1990 JP 412912/90
(43) Date of publication of application: 01.07.1992
(73) Proprietor: MITSUBISHI JUKOGYO KABUSHIKI KAISHA, Tokyo 100 (JP)
(72) Inventor: Ukawa, Naohiko, c/o Hiroshima Techn. Inst., Nishi-ku, Hiroshima, Hiroshima Pref. (JP); Onizuka, Masakazu, c/o Hiroshima Techn. Inst., Nishi-ku, Hiroshima, Hiroshima Pref. (JP); Okino, Susumu, c/o Hiroshima Techn. Inst., Nishi-ku, Hiroshima, Hiroshima Pref. (JP); Inoue, Kenji, c/o Hiroshima Techn. Inst., Nishi-ku, Hiroshima, Hiroshima Pref. (JP); Takashina, Toru, c/o Hiroshima Techn. Inst., Nishi-ku, Hiroshima, Hiroshima Pref. (JP)
(74) Representative: Meissner, Peter E., Dipl.-Ing.

(56) References cited:
- WO-A-87/03511
- AU-A- 61 973
- DE-A- 3 125 008
- US-A- 4 609 109

## Description

The present invention relates to a wet-type exhaust gas desulfurization apparatus, and more specifically, to a device for the treatment of a fly ash-containing absorbing solution produced during the desulfurization of an exhaust gas such as coal fired exhaust gas.

In performing exhaust gas desulfurization by the generally known wet lime method, the exhaust gas may contain HF as well as SOx as harmful components.

The amounts of such components present in a coal fired exhaust gas are, for example, about 1000ppm for SOx and about 40ppm for HF. When such an exhaust gas as described above is treated in a wet-type exhaust gas treatment tower, using CaCO₃ as an SO₂ absorbing agent, the following reactions occur.

CaCO₃ + SO₂ → CaSO₃ + CO₂ (1)

CaCO₃ + 2HF → CaF₂ + CO₂ + H₂O (2)

It is known that when a large quantity of fly ash is present in an exhaust gas, the Al component in the fly ash dissolves in the absorbing solution and reacts with HF from the exhaust gas to produce fluorine compounds of Al (hereinafter referred to as AlFx), and the thus produced AlFx interferes with the dissolving action of limestone (CaCO₃).

In order to solve this problem, there has been proposed a method in which a basic sodium salt is added to an exhaust gas and such trouble is thereby prevented (Japanese Patent Provisional Publication No.167023/1980). Accordingly, it may be inferred that when treating an exhaust gas containing SO₂ and HF, if a basic sodium salt is added to the exhaust gas in an amount corresponding to the amount of HF, such a procedure may be effectively used as an exhaust gas treatment method free from the problems attributable to AlFx.

In this case, however, because the supplied basic sodium salt dissolves in an absorbing solution, the sodium concentration in the absorbing solution may disadvantageously increase when one tries to reduce the amount of drainage, and when one tries to recover gypsum from the absorbing solution, the purity of the recovered gypsum may become degraded.

In addition, there is known a method in which an alkali compound is intermittently added, in a pulsed manner, to an absorbing solution so as to momentarily increase the pH value of the absorbing solution, so that the problems attributable to AlFx are prevented (Japanese Patent Provisional Publication No.122029/1985).

In this method, however, the desulfurization efficiency of the absorbing solution may become disadvantageously low from the commencement of the lowering until the recovery therefrom, though the lowering of efficiency lasts only for a short period of time. In addition, from the view point of the purity of the by-produced gypsum in the wet lime method, it is a problem that fly ash mixed in the gypsum lowers its purity.

The object of the present invention is, in consideration of the above-described technical level, to provide a wet-type exhaust gas desulfurization apparatus which apparatus is exempted from the problems associated with the conventional apparatus.

The gist of the present invention resides in a device for the treatment of the absorbing solution containing, as impurity, fly ash used in a wet lime desulfurization apparatus for exhaust gas, which device comprises a contracting flow path introducing the absorbing solution into a narrow path portion, an electromagnet which is equipped with a timer for the intermittent application of a magnetic field and which is disposed on the outside of one side of said narrow path portion, an expanding flow path connected to the outlet of said narrow path portion, a separator plate for dividing said expanding flow path portion into two paths, one being on the electromagnet side and the other on the opposite side thereto, and extracting ports for extracting said absorbing solution separately through each of the two divided paths.

Although the composition of the fly ash varies depending upon the composition of the fuel such as coal, generally the fly ash consists mainly of oxides of silicon, aluminum and iron.

Of these components of the fly ash, oxides of iron have strong magnetism and therefore form such a magnetic field as the lines of magnetic forces become converged with the use of an electric or permanent magnet, and when an absorbing solution slurry containing fly ash is introduced into such magnetic field, the fly ash alone moves toward the vicinity of the magnet owing to the magnetic forces, whereby it is separated and collected. The present invention is an application of such principle.

In general, an absorbing solution slurry contains, in addition to fly ash, a mixture of unreacted calcium carbonate and gypsum as suspended particles, but the magnetism is so small for these additional substances that the recovery of the fly ash alone by separation is possible under the magnetic field, as described above.

Accordingly, by fully or partially returning the slurry of the absorbing solution to the absorption stage after the separation of fly ash, because it becomes now possible to remove the fly ash, which is a source of eluted Al, from the absorbing solution slurry, so that not only the problems attributable to AlFx may be resolved, but also it becomes possible to reduce the amount of fly ash which mixes into the by-product gypsum obtained by filtering the absorbing solution slurry.

For example, an absorbing solution slurry sometimes contains 20 wt% of slurry, and if one assumes that 18.0 wt% of the slurry is gypsum, 0.5 wt% is limestone, 1.5 wt% is mixed fly ash, and that the by-produced gypsum after the filtration has the same composition as the gypsum in the slurry, the purity of the by-produced gypsum is calculated as 90 wt%.

When the device of the present invention is applied to remove fly ash from the slurry, and the removal rate for the fly ash is 90 %, the concentration of the fly ash in an absorbing solution slurry corresponding to the above example becomes 0.15 wt%, and the purity of the by-produced gypsum thus obtained can be improved up to 96.5 wt%.

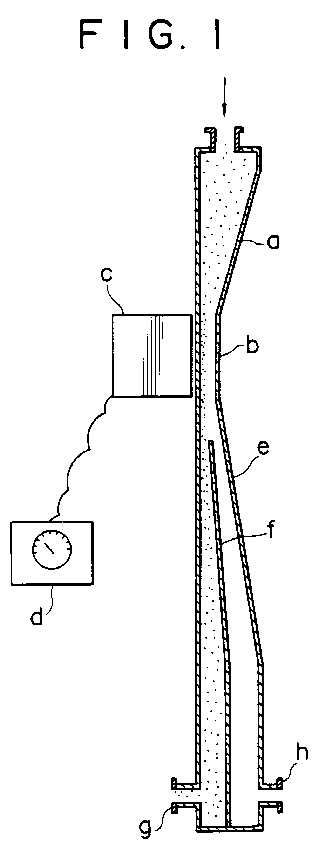

In the following, the function of the present device practicing the above-described principle will be explained in detail with reference to Fig.1. An absorbing solution containing fly ash is supplied into a contracting flow path portion "a" by a pump etc. from the direction of an arrow mark in the upper part of Fig.1.

This absorbing solution is introduced into a narrow path portion "b" through the contracting flow path portion "a".

To the narrow path portion "b", there is applied a magnetic field produced by an electromagnet "c", and the fly ash in said absorbing solution is attracted to the wall surface on the side of the electromagnet "c".

By forming the narrow path portion, the distance between the magnetic poles of the electromagnet and the absorbing solution can be reduced, and the fly ash can be attracted by stronger magnetic forces.

A part of the attracted fly ash falls down along the wall surface and is extracted from an extracting port "g" as a concentrated absorbing solution of the fly ash.

A major part of the remaining is accumulated as it is attracted to the wall surface near the electromagnet "c".

After an electrical power supplied to the electromagnet for a determined period of time, the power supply is turned off for a predetermined period of time by the timer "d". In this case, the fly ash accumulated on the wall surface because of the magnetic forces begins to fall by the gravity.

In this case, the fly ash falls down along the flow path on the electromagnet side, one of the flow paths divided from the expanding flow path "e" by the separator plate "f", and is extracted from the extracting port "g" described above. The time period of supplying electric power to the electromagnet "c" is set shorter when the concentration of the fly ash is high, and longer in opposite cases.

The accumulated fly ash is peeled off and falls down very rapidly when the electromagnet loses its magnetic forces, so that a period of time during which the electric power is not supplied may be shortened as compared with the period of time during which the electric power is supplied.

The absorbing solution, from which fly ash has been removed, flows along a flow path opposite to the electromagnet "c", one of the flow paths divided from the expanding flow path by the separator "f", and is discharged from the extracting port "h" out of the system.

In the case where the fly ash has to be removed at a high rate, an apparatus having the devices of Fig. 1 in a multistage manner may also be used. That is, a plurality of separating devices may be provided, and the absorbing solution extracted from the extracting port "h" may be again supplied into the contracting pipe portion "a" of the separating device at the subsequent stage.
Fig. 1 is a schematic diagram for explaining the action of the absorbing solution of the exhaust gas desulfurization apparatus of the present invention; and
Fig. 2 is a schematic diagram showing an embodiment of an exhaust gas desulfurization apparatus using the device of the present invention.

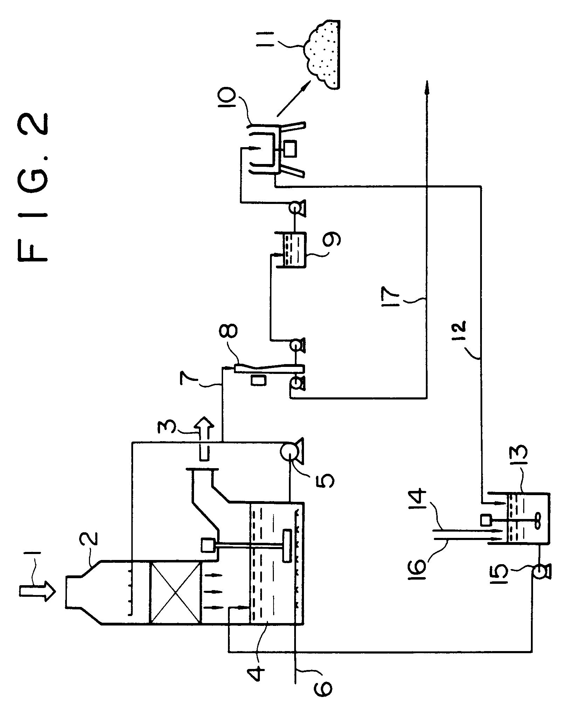

In the following, an embodiment utilizing the device of the present invention will be explained with reference to Fig.2.

Exhaust gas was dispensed from a small-sized dust coal burning oven (not shown) at a rate of 200 Nm³/h, and forwarded into a system shown in Fig. 2, in which the absorbing solution was treated.

The temperature of the exhaust gas to be treated was adjusted to a temperature of 110°C at the inlet by a heat exchanger (not shown) and the concentration of fly ash was adjusted to about 400 mg/Nm³ by a cyclone and a bag filter (not shown). The SO₂ concentration of this exhaust gas to be treated was 3000 ppm, and the HF concentration thereof was 40 ppm.

The exhaust gas to be treated is introduced into an absorption tower 2 through a line 1, and discharged through a line 3 after SO₂, HF and fly ash has been removed from the gas.

In the lower portion of the absorption tower 2, there is provided a slurry tank 4 containing an absorbing solution slurry, and air for oxidation through a line 6 is supplied into the bottom portion of the tower.

The absorbing solution slurry is circulated to the upper part of the absorption tower 2 from the slurry tank 4 by an absorbing solution pump 5.

A part of the absorbing solution slurry is drawn out through a line 7 and forwarded into a fly ash separator 8 which is a part of the device of the present invention.

The structure and function of the fly ash separator are the same as illustrated in Fig. 1 above.

The treated absorbing solution, the fly ash concentration of which has been reduced, is supplied to a centrifugal separator 10 through a tank 9, in which centrifugal separator, there is separated gypsum 11 with high purity.

The filtrate remained after the separation of the gypsum is forwarded to a limestone slurry preparation tank 13 through a line 12.

Into the limestone slurry preparation tank 13, there is supplied limestone powder through a line 14, which powder is turned into a limestone slurry with a predetermined concentration, and a definite amount of the thus prepared limestone is supplied into the slurry tank 4 via pump 15.

Into the limestone slurry preparation tank 13, there is supplied, in addition to the filtrate, make-up water from the outside of the system through a line 16.

On the other hand, the treated absorbing solution, the fly ash concentration of which has been increased, is discharged out of the system through a line 17. The gypsum and fly ash in the line 17 are separated by a centrifugal separator etc. (not shown) when occasion demands. Under the above conditions, stationary operation of the device was conducted while a magnetic field of 7000 gauss (0,7 Tesla) was intermittently applied to the narrow path portion (portion "b" in Fig.1) of the fly ash separator 8. As a result, the SO₂ concentration in the gas discharged through the line 3 was 170 ppm, and stable operation of the device could be effected, when the pH value of absorbed slurry in the slurry tank 4 was 5.6. In addition, the CaCO₃ concentration in the absorbing solution reached 0.056 mol/l, and the reactivity of CaCO₃ was good.

Furthermore, when the concentrations of aluminum and fluorine in the filtrate of the absorbing solution were determined, these were as extremely small as below 1.0 mol/l and 25 mg/l, respectively. In addition, when the purity of the obtained gypsum was analyzed, it was above 96 % and the gypsum assumed a white color.

Moreover, while a magnetic field of 7000 gauss (0,7 Tesla) was being applied to the narrow path portion (the portion "b" in Fig.1) of the fly ash separator 8, the slurry in the line 7 in Fig.2 (slurry before its passage through the fly ash separator 8) and the slurry picked up from the line, through which the slurry is to be supplied to the tank 9, (slurry after its passage through the fly ash separator 8) were collected and the thus collected slurry was filtered and dried at 60°C, whereupon its composition was analyzed and the result set forth in Table 1 was obtained.

**Table 1**

| Analytical Result of the Compositions of Slurry before and after the Passage through the Fly Ash Separator | | |
|---|---|---|
| | Slurry before passage | Slurry after passage |
| CaSO₄·2H₂O (wt%) | 92.1 | 96.2 |
| CaSO₄·1/2H₂O (wt%) | 0.01 or less | 0.01 or less |
| CaCO₃ (wt%) | 2.5 | 2.6 |
| SiO₂ + IAC* (wt%) | 5.4 | 1.2 |

| | | |
|---|---|---|
| * IAC stands for an insoluble acidic component, which is the amount of solid substance remained after concentrated hydrochloric acid is added to the slurry and the mixture is boiled. | | |

The total of SiO₂ and the insoluble acidic component is more or less proportional to the amount of fly ash in the slurry, and it may be seen from Table 1 that this component is removed from the slurry after the passage of the slurry through the fly ash separator.

### [Comparative Example]

The same device as in Example 1 was used and operated under the same conditions regarding the exhaust gas to be treated and the same operating conditions as in Example 1 with the exception that the power supply to the electromagnet was stopped.

In this comparative example, after the commencement of the operation, the pH value of the absorbing solution in the slurry tank decreased and finally became 4.3. Because the CaCO₃ concentration in the absorbing solution was adjusted in the same way as in Example 1, it was 0.057 mol/l and almost equal to the concentration in Example 1, but it was evident that the reactivity of CaCO₃ was markedly lowered owing to the lowering of the pH value, compared with Example 1. In addition, the SO₂ concentration in the gas discharged from the line 3 was 320 ppm, and the desulfurization rate was also lowered.

Furthermore, the concentrations of aluminum and fluorine in this absorbing solution were 85 ml/l and 138 mg/l, respectively. The purity of the gypsum thus obtained was analyzed and found to be 92 %, and the gypsum assumed grayish color owing to the mixed fly ash.

Still futhermore, in this case, the slurry before and after the fly ash separator 8, which was not operating, i.e., in the line 7 and the slurry collected from the line through which the slurry is supplied to the tank 9, was filtered, and dried at a temperature of 60°C. Then the treated slurry was subjected to composition analysis, and the results are shown in Table 2 below.

**Table 2**

| Result of Composition Analysis of Slurry before and after its Passage through the Unoperated Fly Ash Separator | | |
|---|---|---|
| | Slurry before passage | Slurry after passage |
| CaSO₄·2H₂O (wt%) | 92.1 | 92.2 |
| CaSO₄·1/2H₂O (wt%) | 0.01 or less | 0.01 or less |
| CaCO₃ (wt%) | 2.5 | 2.6 |
| SiO₂ + IAC* (wt%) | 5.4 | 5.3 |

| | | |
|---|---|---|
| * IAC is the same as in Table 1. | | |

The total of SiO₂ and the insoluble acidic component is more or less proportional to the amount of fly ash in the slurry, and it is seen from Table 2 that when the power supply to the electromagnet attached to the fly ash separator is stopped, the concentration of this component in the slurry does not change before and after the passage of the slurry through this separator, and therefore the fly ash is not removed.

## Claims

1. A wet-type exhaust gas desulfurization apparatus comprising a device for the treatment of the absorbing solution containing as impurity fly ash, said device comprising: a contracting flow path portion (a) introducing said absorbing solution into a narrow path portion (b); an electromagnet (c) provided on the outside of one side of said narrow path portion, said electromagnet being equipped with a timer (d) for intermittently applying a magnetic field; an expanding flow path portion connected to the outlet of said narrow path portion; a separator (f) for dividing said expanding flow path portion into one passage on the electromagnet side and the other passage on the opposite side thereto; and extracting ports (g, h) for extracting said absorbing solution separately through each of the two passages divided from said expanding flow path portion.

2. An apparatus according to Claim 1, wherein the magnetic force applied to the narrow path portion by said electromagnet (c) is about 7000 gauss (0,7 Tesla).

3. An apparatus according to Claim 1, wherein gypsum is separated from the absorbing solution extracted through the extracting port (h) of the passage opposite to said electromagnet (c).

## Patentansprüche

1. Eine nach dem Naßverfahren arbeitende Abgasentschwefelungsanlage, die eine Vorrichtung zur Behandlung der Absorptionslösung umfaßt, die als Verunreinigung Flugasche enthält, wobei diese Vorrichtung ausgestattet ist mit: einem sich verjüngenden Strömungskanal (a), über den die Absorptionslösung in einen schmalen Kanalabschnitt (b) fließt; einem Elektromagneten (c), der sich außen an einer Seite des besagten schmalen Kanalabschnitts befindet, wobei besagter Elektromagnet über eine Zeitschaltung (d) zum intermittierenden Aufbau eines Magnetfeldes verfügt; einem sich erweiternden Strömungskanal am Austritt des besagten schmalen Kanalabschnitts; einer Trennplatte (f) zum Unterteilen des besagten sich erweiternden Strömungskanalabschnitts in einen Kanal auf der Seite des Elektromagneten sowie einen anderen Kanal auf der gegenüberliegenden Seite; und Entnahmestellen (g, h) zur separaten Entnahme der besagten Absorptionslösung aus jedem der beiden Kanäle, in die der sich erweiternde Strömungskanalabschnitt unterteilt ist.

2. Eine Anlage gemäß Patentanspruch 1, wobei das von besagtem Elektromagneten (c) an dem schmalen Kanalabschnitt erzeugte Magnetfeld eine Stärke von ca. 7000 Gauss (0,7 Tesla) hat.

3. Eine Anlage gemäß Patentanspruch 1, bei der aus der Absorptionslösung, die an der Entnahmestelle (h) des dem besagten Elektromagneten (c) gegenüberliegenden Strömungskanals ausgetragen wird, Gips abgeschieden wird.

## Revendications

1. Appareil de désulfuration de gaz d'échappement du type humide, comprenant un dispositif pour le traitement de la solution absorbante contenant, comme impureté, des cendres volantes, ledit dispositif comprenant : une partie (a) d'étranglement de la voie d'écoulement introduisant ladite solution absorbante dans une partie de voie étroite (b) ; un électroaimant (c) prévu à l'extérieur d'un côté de la partie de voie étroite, ledit électroaimant étant équipé d'une horloge (d) pour appliquer, de façon intermittente, un champ magnétique ; une partie d'élargissement de la voie d'écoulement reliée à la sortie de ladite partie de voie étroite ; un séparateur (f) pour diviser ladite partie d'élargissement de voie d'écoulement en un passage sur le côté de l'électro-aimant et un autre passage sur le côté opposé à celui-ci ; et des orifices d'extraction (g, h) pour extraire ladite solution absorbante séparément à travers chacun des deux passages divisés à partir de ladite partie d'élargissement de la voie d'écoulement.

2. Appareil selon la revendication 1, dans lequel la force magnétique appliquée à la partie de voie, étroite par ledit électroaimant (c) est d'environ 7000 gauss (0,7 tesla).

3. Appareil selon la revendication 1, dans lequel du gypse est séparé de la solution absorbante extraite à travers l'orifice d'extraction (h) du passage opposé audit électroaimant (c).
